# EUROPEAN PATENT SPECIFICATION

(11) **EP 3 433 918 B1**
(45) Date of publication and mention of the grant of the patent: **07.10.2020**
(21) Application number: 17778499.8
(22) Date of filing: 10.04.2017
(51) Int. Cl.: H02J 7/00, G01R 31/36, H01M 10/44, H01M 10/48, H03K 3/84

(54) **BATTERY CHARGING BASED ON REAL-TIME BATTERY CHARACTERIZATION**
BATTERIELADEN AUF BASIS VON ECHTZEIT-BATTERIECHARAKTERISIERUNG
CHARGE DE BATTERIE BASÉE SUR UNE CARACTÉRISATION DE BATTERIE EN TEMPS RÉEL

(30) Priority: 08.04.2016 US 201662319973 P; 23.01.2017 US 201762449445 P
(43) Date of publication of application: 30.01.2019
(60) Divisional application: 20191802.6
(73) Proprietor: Gbatteries Energy Canada Inc., Ottawa, ON K2E 0B9 (CA)
(72) Inventor: TKACHENKO, Oleksandr, Ottawa, ON K2C 4C8 (CA); SHERSTYUK, Mykola, Ottawa, ON K2C 4E5 (CA)
(74) Representative: Optimus Patents Limited
(86) International application number: PCT/CA2017/000081
(87) International publication number: WO 2017/173526

(56) References cited:
- US-A- 5 481 174
- US-A1- 2013 026 976
- US-A1- 2014 203 762
- US-A1- 2014 372 055
- US-A1- 2014 375 275
- US-B1- 6 329 792
- US-B2- 8 570 001

## Description

### BACKGROUND

Electrochemical Impedance Spectroscopy (EIS) has been in use for a number of years to test rechargeable batteries, such as lithium ion batteries. EIS is well suited for observing reactions in the kinetics of electrodes and batteries. In EIS, the impedance of battery over a range of frequencies is measured. Energy storage and dissipation properties of the battery can be revealed by inspecting the resulting frequency response curve. Impedance parameters such as ohmic resistance and charge transfer resistance can be estimated, for example, from a Nyquist plot of frequency response of the battery.

Other parameters that can be measured with use of EIS relate to the double layer effect, which is the formation of two layers of opposite polarity at the interface between electrode and electrolyte. The charge stored on one side is equal in value and opposite in sign with respect to the charge stored on the other side. If one of the two phases is a liquid, there is a minimum distance that the solvated ions can reach. This region of minimum distance is the so-called Helmholtz plane. The region external to the Helmholtz plane is called the outer Helmholtz layer. The ions can be located at distances below the plane. This region is called the inner Helmholtz layer. EIS is used to characterize the double layer. Parameters extracted from such characterization are used together with mathematical model of the phenomenon. Electrochemical insertion, intercalation and alloying are all processes involving the inner layer.

Another set of parameters measurable with use of EIS are diffusion and reaction parameters which change during battery charging, discharging and also are dependant on battery age, health condition and temperature. The commonly used experimental setups to parameterize electrochemical systems are cyclic voltammetry and galvanostatic cycling. In cyclic voltammetry, the potential difference is changed continuously with a fixed slope, called sweep rate. The sweep rate is changed in sign once a maximum or a minimum potential difference is reached. During this process, the current intensity is registered as function of the potential and, in general, the shape depends on the sweep rate. In galvanostatic cycling experiments, the current intensity is imposed and constant. The potential will be measured as function of the total charge passed through the system. In general, the shape of this curve is a function of the current intensity. The current intensity is changed in sign once a maximum or a minimum potential difference is reached. The shape of such curves is related to the reaction mechanism, transport of the reactants from the bulk of the phase to the interface, and transport of the product in the opposite direction

The electrode materials have to be stable in the battery electrolyte for the whole potential range used during the battery cycle, and vice versa. Such stability is achieved thanks to the formation of a protective layer called solid electrolyte interphase (SEI). It can be an oxidation/reduction product, in which case it consumes part of the charge of the battery, or a chemical product, formed by contacting the particles with the electrolyte. The SEI influences the kinetic behavior of the electrode, the irreversible charge consumed during cycling, and the cycle life.

US5,481,174 (Martin et al.) describes a method of charging a lithium ion cell. A power supply is connected to the battery. A pulse train having a plurality of pulses charges the battery. Each pulse is followed by a rest interval, then a discharge action, and then a further rest interval. The charging occurs simultaneously with measurement of the battery voltage. The voltage is monitored to ensure that it does not exceed a maximum threshold during charging.
US2013/0026976 A1 (Lu) provides a pulsed charging method for a rechargeable battery. A current pulse is provided according to a charge-discharge cycle. A charge current pulse width is used for charging the rechargeable battery. The rechargeable battery is also discharged with a discharge current pulse width. In addition, one or more voltage threshold values are further set. As a result of a comparison of the terminal voltage of the rechargeable battery with the one or more voltage threshold values, the charge current pulse width is reduced. This approach may improve the charging efficiency.

### SUMMARY

In accordance with a first aspect of the invention, a method comprising the steps of appended claim 1 is provided. In accordance with a second aspect of the invention, an apparatus comprising the features of appended claim 6 is provided. The dependent claims provide further details of embodiments of the invention.

### BRIEF DESCRIPTION OF THE DRAWINGS

With respect to the discussion to follow and in particular to the drawings, it is stressed that the particulars shown represent examples for purposes of illustrative discussion, and are presented in the cause of providing a description of principles and conceptual aspects of the present disclosure. In this regard, no attempt is made to show implementation details beyond what is needed for a fundamental understanding of the present disclosure. The discussion to follow, in conjunction with the drawings, makes apparent to those of skill in the art how embodiments in accordance with the present disclosure may be practiced. Similar or same reference numbers may be used to identify or otherwise refer to similar or same elements in the various drawings and supporting descriptions. In the accompanying drawings:
Fig. **1** shows a battery charging system in accordance with an embodiment of the present disclosure.
Fig. **2** shows a variation of the battery charging system shown in Fig. **1** in accordance with an embodiment of the present disclosure.
Fig. **3** shows a battery charging system in accordance with an embodiment of the present disclosure that uses pulsed charging.
Fig. **4** depicts an illustrative example of a pulse train.
Fig. **5** shows a variation of the battery charging system shown in Fig. **3** in accordance with an embodiment of the present disclosure.
Fig. **6** shows processing for pulsed charging in accordance with the present disclosure using continuous EIS measurements.
Fig. **7** shows processing for pulsed charging in accordance with the present disclosure using intermittent EIS measurements.
Fig. **8** shows processing for pulsed charging in accordance with the present disclosure using pulses suitable for EIS measurements.

### DETAILED DESCRIPTION

The present disclosure describes techniques for battery charging using charging parameters that can be determined in real time. In various embodiments, a pulse train can be used to produce a charging current for charging a battery. Battery parameters can be measured during the charging. The pulse train can be adjusted based on the measured battery parameters along with ambient conditions to optimize the pulse train for battery charging. In some embodiments, the pulse train can be adjusted, during the time that the battery measurements are made, to comprise pulses that are optimized for the battery measurements.

In the following description, for purposes of explanation, numerous examples and specific details are set forth in order to provide a thorough understanding of the present disclosure.

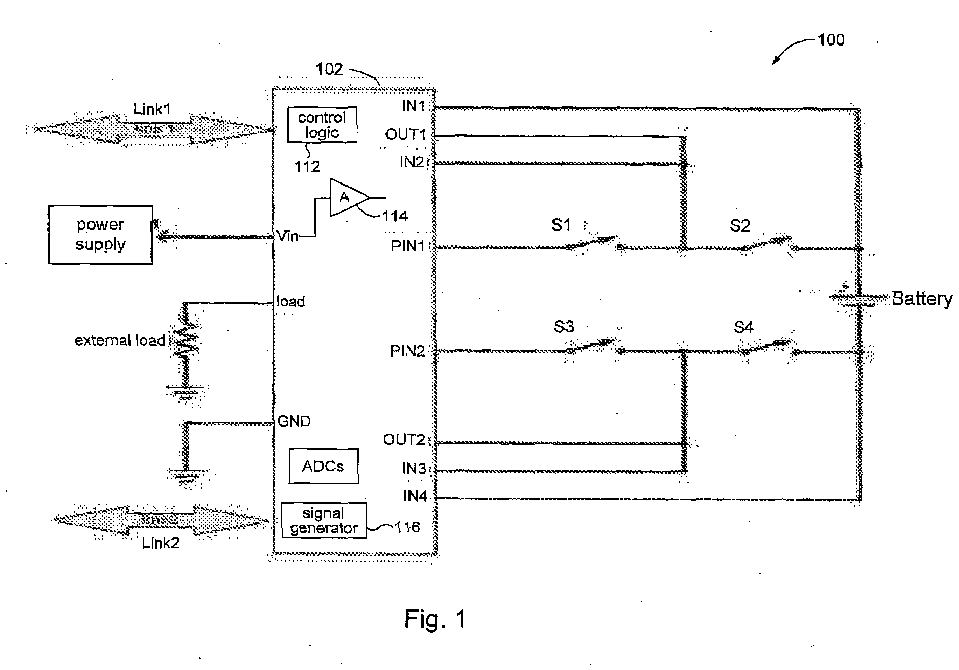

Fig. 1 illustrates a battery charging system (circuit) 100 for charging a rechargeable battery (e.g. lithium-ion battery cell), in accordance with the present disclosure. The battery charging system 100 can include a controller 102 and switches S1, S2, S3, S4. Controller 102 can include control logic 112 to perform battery charging in accordance with the present disclosure.

An external load can be connected to the controller 102 at its load terminal to receive power from the battery (battery discharging).

An external power supply can be connected to the controller 102 at its Vin terminal to supply power to the battery during battery charging. The controller 102 can include a level shifter 114 to attenuate the voltage provided by the external power supply during battery charging. The level shifter 114 can be an op-amp, a DC-DC converter, or any other suitable level shifting circuit.

The controller 102 can include high speed analog-to-digital converters (ADCs) for converting signals at its inputs In1, In2, In3, In4.

The controller 102 can include a signal generator 116. The signal generator 116, under control of the control logic 112, can produce a sinusoidal signal of a given frequency. The controller 102 can connect the output of the signal generator 116 to either of its outputs Out1, Out2. In some embodiments, for example, the signal generator 116 can produce signals in the range from 0.1 Hz to 100 MHz. In some instances, the signal generator 116 can output a signal at a single frequency. In other instances, the signal generator 116 can sweep through a range of frequencies. Merely to illustrate this point, for example, the controller 102 can operate the signal generator 116 to output signals in the range from 1 Hz to 100 KHz in increments of 10 Hz at 5 second intervals.

The controller **102** includes Pin**1** and Pin**2**. The controller **102** can connect the battery to an external power supply via Pin**1** and Pin**2**, when in charge mode, to be charged by the external power supply. Alternatively, the controller **102** can connect the battery to an external load via Pin**1** and Pin**2**, when in discharge mode, to provide power from the battery to the external load,

The controller **102** can include communication links Link**1**, Link**2** to communicate with external devices. Link**1**, for example, can be used to communicate aspects of the battery condition to battery management system in an electronic device (not shown) that incorporates the battery charging system **100.** Information relating to battery condition includes but is not limited to battery parameters measured in real time, calculations, overall battery health, charge state, history of battery parameters, and the like. In some embodiments, Link 2 can be used for advanced external loads, so-called "smart" loads, to communicate battery sate and negotiate optimal functioning modes for both the battery and the external load. In embodiments that comprise multiple battery systems, both Link**1** and Link**2** can be used to communicate battery condition and optimal modes, respectively, to other elements in the system.

### Modes of Operation

The discussion will now turn to a description of the discharge mode and charge mode of operation in the battery charging system **100** in accordance with the present disclosure.

### A. Discharge Mode

In discharge mode, the controller **102** can turn OFF or otherwise quiesce the signal generator **116**. The controller **102** can operate the switches S**1**, S**2**, S**3**, S**4** to the ON state (CLOSED position). The controller **102** can connect PIN**1** to the load terminal and Pin**2** to the ground (GND) terminal, thus connecting the battery to the external load. In accordance with some embodiment of the present disclosure, during discharge mode the controller **102** may interrupt the delivery of power to the external load to make EIS measurements (described below). For example, a smart load may coordinate with the controller **102** (e.g., vial Link**2**) to interrupt power for short periods of time (e.g., **50** uS or so).

### B. Charge Mode

In charge mode, the controller **102** can operate the signal generator **116** to output signals. The controller **102** can perform a calibration sequence on the signal generator **116** For example, the controller **102** can operate the switches S**1**, S**2**, S**3**, S**4** to the OFF state (OPEN position). In this configuration, output from the signal generator **116** can be provided to Out**1** and calibration can be performed via In**2**. Likewise, output from the signal generator **116** can be provided to Out**2** and calibration can be performed via In**3**.

During charging, the controller **102** can alternate between a charging phase where energy (charging current) is provided from the external power supply to the battery and a measurement phase where making EIS measurements are made on the battery. The alternation between charging phase and measurement phase can be performed intermittently, for example, in response to a change in operating conditions (e.g., ambient temperature). The alternation can be periodic, for example, the EIS measurements can be performed at regular intervals from one millisecond to many minutes.

For the charging phase, the controller **102** can operate switches S**1**, S**2**, S**3**, S**4** to the ON state and turn OFF or quiesce the signal generator **116** for the charging phase, thus allowing the external power supply to charge the battery.

For the measurement phase, EIS measurements are typically obtained by disconnecting the battery from its charging current path and coupling the battery to a signal source (drive) in the form of band limited white noise. The EIS measurements include measuring the battery's response (e.g., current response) over a given range of frequencies of the drive signal. Accordingly, the controller **102** can operate the switches S**1**, S**3** to the OFF state to disconnect the external power supply from the battery, and turn ON the signal generator **116** thus providing a drive signal to the battery via output Out**1** for making EIS measurements. Measurements can be taken by converting signals at input In1 using an ADC at In1. Since the duration of the measurement can be relatively short (e.g., ranging from tens of microseconds to a few seconds), the measurement can occur without disrupting the normal operation of the battery. For example, where the battery is incorporated into a smart phone, the main processor may choose to insert the EIS measurements at moments it deems the smart phone to be in idle or near idle.

In some embodiments, measurements may be continuous. The controller **102** operate switches S**1**, S**2**, S**3**, S**4** to the ON state and turn ON the signal generator **116**, thus allowing both power from the external power supply and signals from the signal generator **116** to reach the battery, EIS measurements can be made simultaneous with the battery being charged.

### C. Adapting Battery Charging

It is understood that EIS measurements are correlated with electrochemical and even mechanical phenomena inside the battery. These electrochemical and mechanical phenomena manifest themselves as various parameters of the battery, including for example, state of charge (SOC), capacitance of the double layer, thickness of the double layer, electrolyte oxidation level, corrosion of the current collectors, degradation of the active material binder, diffusion rates within the battery, and other physical aspects of the battery. The EIS measurements can be analyzed as a sum of sinusoidal functions (a Fourier series). In some embodiments, the analysis can be made using a suitable fast Fourier transform (FFT) technique.

In accordance with the present disclosure, the controller **102** can adapt charging of the battery based on the EIS measurements. For example, the charging current may be reduced (e.g., by reducing the gain of level shifter **114**) when the EIS measurements indicate that diffusion rates in the battery are dropping. This may be desirable under some circumstances to increase the life cycle of the battery. By inserting EIS measurements at certain intervals, the charging process can be adapted in real time to adjust the charging current to improve the life cycle of the battery.

Further in accordance with the present disclosure, the controller **102** can analyze the EIS measurements to assess the condition of the battery and report the results from the analysis. In some embodiments, for example, the results may be reported (e.g., via Link**1**) to a battery management system.

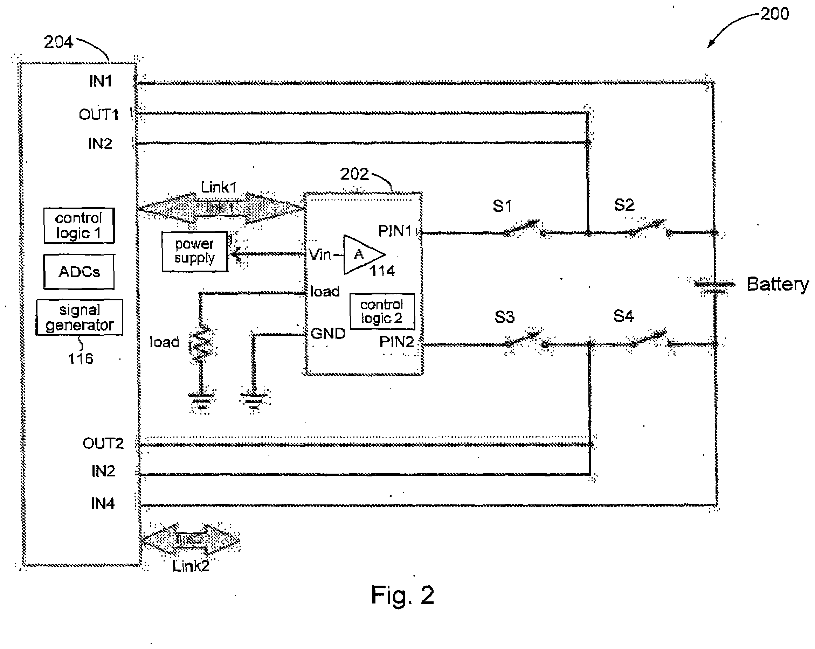

Fig. **2** shows a battery charging system (circuit) **200** in accordance with another embodiment of the present disclosure. Battery charging system **200** can comprise first controller **202** and a second controller **204.** The circuit components described in controller **102** of battery charging system **100** are apportioned to the first and second controllers **202**, **204** of battery charging system **200.** Likewise, the control logic **112** in controller **102** of battery charging system **100** is apportioned to control logic **1** and control logic **2** in battery charging system **200.** Operation of battery charging system **200** is the same as battery charging system **100.**

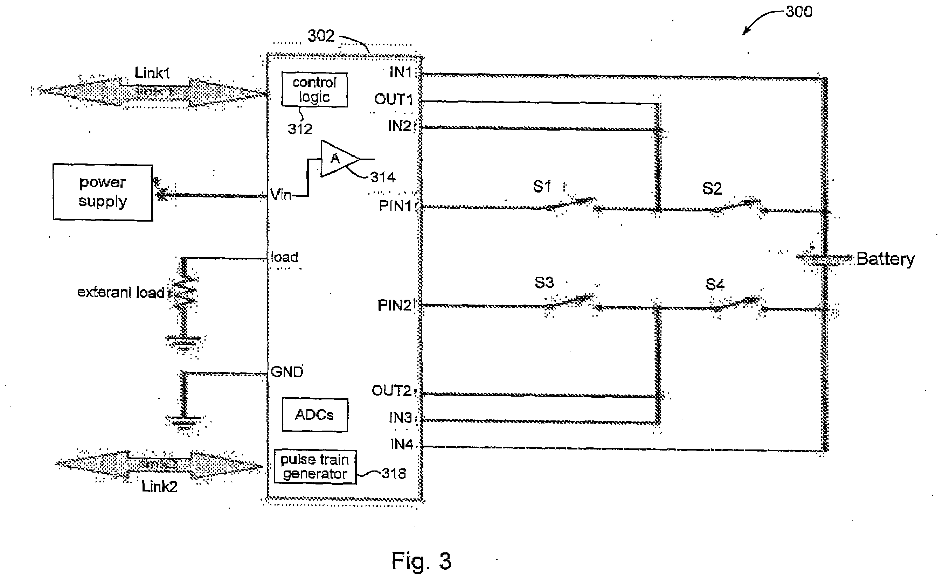

Fig. **3** illustrates a battery charging system (circuit) **300** for charging a rechargeable battery (e.g. lithium-ion battery cell), in accordance with the present disclosure. The battery charging system **300** can include a controller **302** and switches S**1**, S**2**, S**3**, S**4**. The controller **302** may include control logic **312** to perform battery charging in accordance with the present disclosure.

An external load can be connected to the controller **302** at its load terminal to receive power from the battery (battery discharging).

An external power supply can be connected to the controller **302** at its Vin terminal to supply power to the battery during battery charging. The controller **302** can include a level shifter **314** to attenuate the voltage provided by the external power supply during battery charging. The level shifter **314** can be an op-amp based design, a DC-DC converter, or any other suitable level shifting circuit.

The controller **302** can include high speed analog-to-digital converters (ADCs) for converting signals at its inputs In**1**, In**2**, In**3**, In**4**.

The controller **302** can include a pulse train generator **316.** The pulse train generator **316**, under the control of control logic **312**, can produce a train of pulses. The controller **302** can connect the output of the pulse train generator **316** to either of its outputs Out**1**, Out**2**.

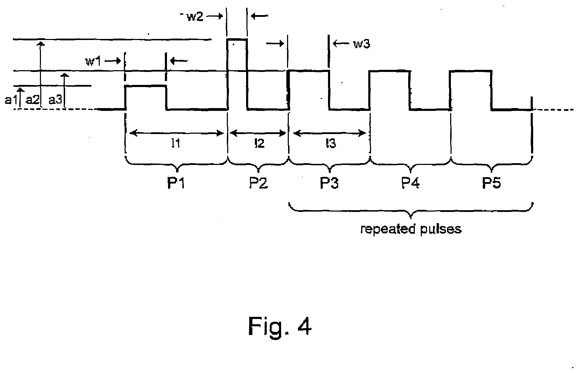

The controller **302** can control the pulse amplitude, pulse length (duration, period) and pulse width of each pulse. On the one hand, for example, the controller **302** can produce a train of pulses having a constant duty cycle. On the other hand, the controller **302** can produce a pulse train of pulses having different pulse amplitudes, pulse lengths, and pulse. Fig. **4**, for example, shows a portion of a pulse train comprising pulses P**1**, P**2**, P**3**, P**4**, P**5**. Pulses P**1** - P**3** have different pulse amplitudes (a**1** ≠ a**2** ≠ a**3**), pulse lengths (l**1** ≠ l**2** ≠ l**3**) and different pulse widths (w**1** ≠ w**2** ≠ w**3**). The pulse train may include a repetition of plses having the same pulse period and pulse width; for example, pulses P**3**, P**4**, and P**5** show an example of repeated pulses. In general, the pulse train may comprise pulses having any combination of the same or different amplitudes, lengths, and widths. In some embodiments, the pulses can be rectangular. In other embodiments, the pulses can have other shapes.

The controller **302** includes Pin**1** and Pin**2**. The controller **302** can connect the battery to an external power supply via Pin**1** and Pin**2**, when in charge mode, to be charged by the external power supply. Alternatively, the controller **302** can connect the battery to an external load via Pin**1** and Pin**2**, when in discharge mode, to provide power from the battery to the external load.

The controller **302** can include the same communication links Link**1**, Link**2** for communicating with external devices as controller **102.**

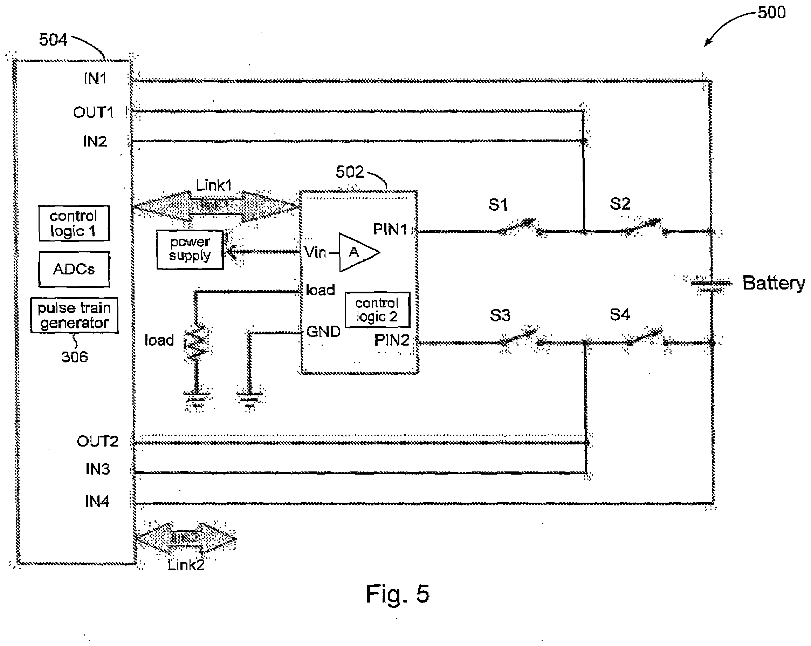

Fig. 5 shows a battery charging system (circuit) **500** in accordance with another embodiment of the present disclosure. Battery charging system **500** can comprise first controller **502** and a second controller **504.** The circuit components described in controller **302** of battery charging system **300** are apportioned to the first and second controllers **502**, **504** of battery charging system **500.** Likewise, the control logic **312** in controller **302** of battery charging system **100** is apportioned to control logic **1** and control logic 2 in battery charging system **500.** Operation of battery charging system **500** is the same as battery charging system **300.**

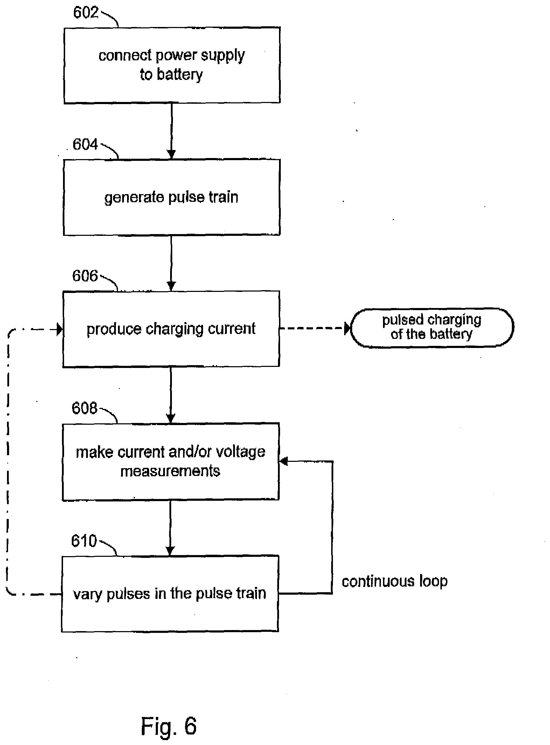

Referring to Fig. **6** and with reference to Fig. **3**, the discussion will now turn to a high level description of processing by control logic **312** for pulse charging a battery in accordance with the present disclosure.

At block **602**, the control logic **312** can configure connections in the controller **302** to connect the external power supply to the battery. For example, the control logic **312** can connect Pin**1** and Pin**2** respectively to the Vin and GND terminals, and operate switches S**1**, S**2**, S**3**, S**4** to the ON state.

At block **604**, the control logic **312** can operate the pulse train generator **318** to produce a pulse train. The control logic **312** may choose initial settings for pulse amplitude, pulse length, and pulse duration for pulses comprising the pulse train based on previously stored measured battery parameters.

At block **606**, the control logic **312** can operate switch S**2** in accordance with the pulse train to generate a pulsed charging current by modulating the output of the external power supply, thus initiating pulse charging of the battery. The pulse amplitudes, pulse lengths, and pulse widths of the pulsed charging current are determined by the pulse amplitudes, pulse lengths, and pulse widths of pulses in the pulse train. In some embodiments, the pulse amplitudes in the pulse train can be used to set the gain of level shifter **314** and hence amplitudes in the pulsed charging current.

At block **608**, while the battery is receiving the pulsed charging current, the control logic **312** can make EIS measurements on the battery, including one or more measurements of current flow into the battery and/or one or more measurements of voltage across the battery. For example, the control logic **312** can operate the ADCs corresponding to inputs In**1** and In**4** for making the measurements without disconnecting the pulsed charging current from the battery. In fact, the pulsed charging current serves as the drive signal for the battery when the EIS measurements are made.

At block **610**, the control logic **312** can accumulate the EIS measurements with previously made EIS measurements. The control logic **312** can analyze the accumulated EIS measurements to assess parameters of the battery as discussed above. Based on the assessed battery parameters, the control logic **312** can vary any one or more of the pulse amplitude, pulse length, and pulse width of pulses comprising the pulse train, which in turn affects the pulsed charging current generated at block **606.** For example, pulse amplitude may be adjusted depending the SOC of the battery. Likewise, pulse length may be adjusted when ion diffusion levels have reached a predetermined threshold, and so on. In this way, pulsed charging of the battery can be optimized, in real time, using EIS measurements of the battery that are made simultaneous with battery charging to increase the cycle life of the battery.

When the charging current is very high (globally or locally in some areas of the battery), the transport rate of lithium ions (Li+) to the anode can exceed the rate that Li+ can be inserted (intercalated) Under these conditions, Li+ may deposit as metallic Li, which can lead to the growth of dendrites. The dendrites can create short circuits, which can degrade the battery's life and its durability and in the worst case cause a fire. EIS measurements made in accordance with the present disclosure be used to detect the development of metal plating formation, even at the very early stages of development.

Accordingly in accordance with some embodiments, the control logic **312** can include analyses to detect the occurrence of metal plating such as dendrite formation, and in response can alter the pulse parameters to reduce the charging current, or interrupt the charging process altogether, In some embodiments, the control logic **312** can reduce the battery's usable capacity, and allow charging to continue only up to the reduce capacity. The battery could still be usable, albeit at reduce capacity.

In some embodiments, the control logic **312** can initiate a discharge sequence to discharge the battery in a controlled manner to reduce the charge level in the battery (or completely deplete the battery) to minimize the risk of a fire hazard. In some instances, the control logic **312** can disable use of the battery entirely. In some instances, the control logic **312** can also communicate the detection of metal plating to a battery management system (e.g., over Link1), which can issue an alarm or other indication to the user.

Fig. **6** shows that in some embodiments, the control logic **312** can continuously make EIS measurements during the time that battery charging is going on. For example, with each iteration, one or more current and/or voltage measurements can be made. The EIS measurements can be combined with previous EIS measurements and analyzed (e.g., Fourier analysis). Battery parameters discussed above can be assessed from the analysis results, and then used to vary parameters (e.g., amplitude, length, and width) of the pulses in the pulse tram for the next iteration. The next iteration can be performed without delay (continuous).

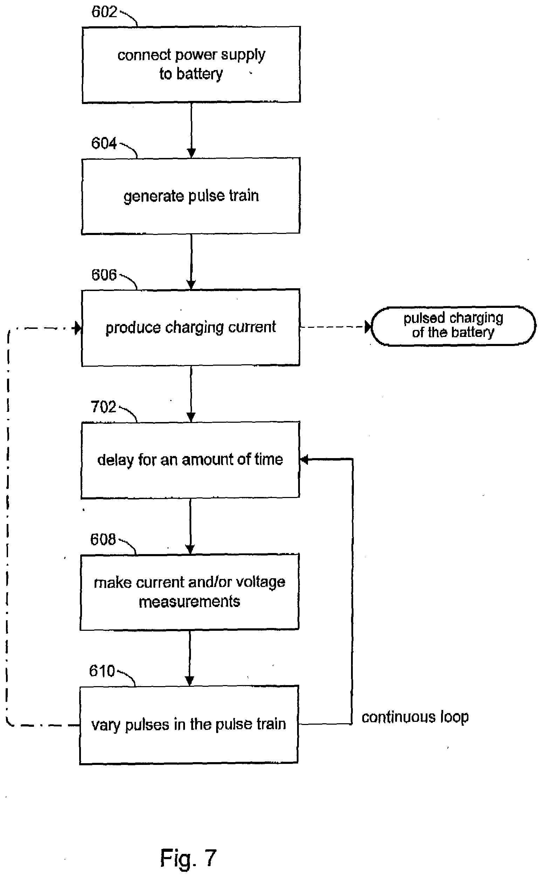

Fig. **7** shows that in some embodiments, the control logic **312** can make intermittent EIS measurements, The processing in Fig. 7 is the same as in Fig. **6** with the inclusion of delay at block **702** to provide delay between making EIS measurements (block **608**). In some embodiments, for example, the delay may be a predetermined fixed value of time. The delay may vary from one iteration to the next. In other embodiments, EIS measurements may be triggered by the occurrence of one or more predetermined events (e.g., change in operating conditions such as ambient temperature); the delay arising from the time between such events.

In the foregoing embodiments the pulsed charging current that drives the battery at the time the EIS measurements are made, is optimized for charging. In other words, the pulse parameters are adjusted based on previously made EIS measurements, as discussed above. In some embodiments, the pulse parameters of the pulsed charging current may be momentarily altered for the purposes of making EIS measurements (i.e., optimized for measurements), and then restored to pulse parameters optimized for charging. This aspect of the present disclosure will now be described.

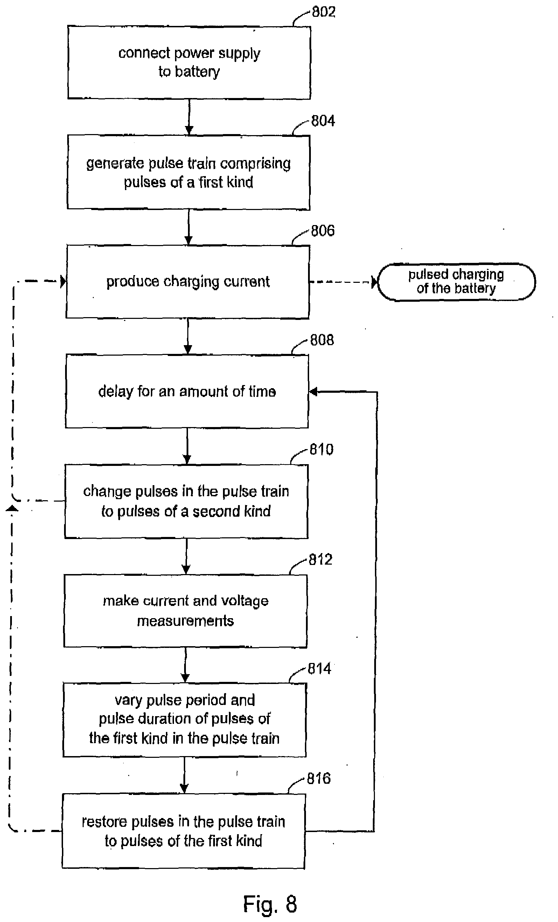

Referring to Fig. **8** and with reference to Fig. **3**, the discussion will now turn to a high level description of processing by control logic **312** for pulse charging a battery in accordance with the present disclosure.

At block **802**, the control logic **312** can configure connections in the controller **302** to connect the external power supply to the battery. For example, the control logic **312** can connect Pin**1** and Pin**2** respectively to the Vin and GND terminals, and operate switches S**1**, S**2**, S**3**, S**4** to the ON state.

At block **804**, the control logic **312** can operate the pulse train generator **318** to produce a pulse train. The control logic **312** may choose initial settings for pulse amplitude, pulse length, and pulse duration for pulses comprising the pulse train based on previously stored measured battery parameters. As such, the pulse tram initially comprises first kinds of pulses to optimize battery charging.

At block **806**, the control logic **312** can operate switch S**2** in accordance with the pulse train to generate a pulsed charging current by modulating the output of the external power supply, thus initiating pulse charging of the battery. The pulse amplitudes, pulse lengths, and pulse widths of the pulsed charging current are determined by the pulse amplitudes, pulse lengths, and pulse widths of pulses in the pulse train. In some embodiments, the pulse amplitudes in the pulse train can be used to set the gain of level shifter **314** and hence the amplitudes in the pulsed charging current.

At block **808**, the control logic **312** can provide delay before proceeding to the next block. In some embodiments, for example, the delay may be a predetermined fixed value of time. The delay may vary from one iteration to the next. In other embodiments, EIS measurements may be triggered by the occurrence of one or more predetermined events (e.g., change in operating conditions such as ambient temperature); the delay arising from the time between such events.

At block **810**, the control logic **312** can set the pulse train generator **316** to generate second kinds of pulses that are more suitable for making EIS measurements. In some embodiments, for example, the pulse train can be a pseudo-random binary pulse sequence, which approximates a form of band-limited white noise, that produces a pulsed charging current having a pulse amplitude in the range of **0.1**C to **20**C and pulse durations in the range from **1** mS to **5000** mS. Consequently, while the resulting pulsed charging current continues to charge the battery, it will no longer be optimized for battery charging, but rather for making EIS measurements. The momentary change in pulse parameters, however, should not be detrimental to the battery charging process because the EIS measurements take on the order of several seconds or less.

At block **812**, while the battery is receiving the pulsed charging current, the control logic **312** can make EIS measurements on the battery, including one or more measurements of current flow into the battery and/or one or more measurements of voltage across the battery. For example, the control logic **312** can operate the ADCs corresponding to inputs In**1** and In**4** for making the measurements without disconnecting the pulsed charging current from the battery. In fact, the pulsed charging current serves as the drive signal for the battery when the EIS measurements are made.

At block **814**, the control logic **312** can adjust the pulse parameters for battery charging as discussed above, for example, in connection with block **610** in Fig. **6****.**

At block 816, the control logic 312 can set pulse train generator 316 to generate pulses of the first kind to resume battery charging using a pulse train that is optimized for battery charging. Control logic 312 can then return to block 808 to repeat the process.

EIS measurements can be performed using any of several possible implementations. In one such implementation, for example, a programmable current source is controlled by an integrated circuit, and the EIS measurements are done continuously. In another implementation where cost control is a factor, the battery's regular charger can be used instead of a separate current source, and its current output can be controlled to generate a suitable pulse train, having parameters selected based on results of the EIS measurements. For example, a laptop computer or smart phone already contains a charging integrated circuit responsible for charging the battery. The charging integrated circuit can be directly controlled through a communication bus such as I²C or 5MBus®.

Embodiments in accordance with the present disclosure, can employ circuitry coupled to the battery cell. Monitoring circuitry in the controller (e.g., 302) can be implemented on ASICs or FPGAs, where the monitoring circuitry monitors, senses, detects and/or samples, on an intermittent, continuous and/or periodic basis, characteristics of the battery including, for example, the impedance of the battery, the terminal voltages and the temperature. The control logic (e.g., 312) can acquires data from the monitoring circuitry and calculate one or more charge signal characteristics (e.g., charge current) and, if appropriate (e.g., to alleviate, minimize and/or reduce the adverse impact of the charging process on the state of the health of the battery), adapt the charging process, for example, by controlling the pulse parameters.

Circuitry for adaptive charging techniques of the present disclosure may employ any monitoring circuitry and techniques to acquire EIS measurements employed by the control circuitry to adapt the charging profile of the battery.

## Claims

1. A method comprising:
connecting (802) a power supply to a battery;
generating (804) a pulse train comprising a plurality of charging-optimized pulses;
producing (806) pulsed charging current from the power supply by modulating the power supply with the pulse train, the battery thereby being charged by the pulsed charging current;
providing (808) delay for an amount of time;
after the delay, generating (810) measurement-optimized pulses,
wherein generating (810) the measurement-optimized pulses comprises generating a pseudo-random binary pulse sequence, and wherein pulsed charging current produced using the pseudo-random binary pulse sequence is characterized as a form of band-limited white noise;
while the battery is being charged with the pulsed charging current that is produced using the pseudo-random binary pulse sequence, making (812) a plurality of Electrochemical Impedance Spectroscopy, EIS, measurements of the battery, wherein making (812) the plurality of EIS measurements includes making the plurality of EIS measurements based on the pulsed charging current that is produced using the pseudo-random binary pulse sequence;
varying (814), based on the plurality of EIS measurements, as the battery is being charged, at least one of pulse lengths and pulse durations of the plurality of charging-optimized pulses that comprise the pulse train; and
restoring (816) charging of the battery with the charging-optimized pulses.

2. The method of claim 1, further comprising varying, based on the plurality of EIS measurements, pulse amplitudes of the plurality of the charging-optimized pulses that comprise the pulse train.

3. The method of claim 1, wherein the plurality of EIS measurements are made (812) without disconnecting the pulsed charging current from the battery.

4. The method of claim 1, further comprising continuously making (812) the plurality of EIS measurements while the battery is receiving the pulsed charging current.

5. The method of claim 1, wherein making (812) the plurality of EIS measurements comprises making (812) the plurality of EIS measurements intermittently in response to a change in operating conditions.

6. A circuit (100) comprising:
a terminal for a connection (802) to an external power supply;
a terminal for a connection to a battery;
a pulse train generator (318) configured to generate (804) a pulse train comprising a plurality of charging-optimized pulses; and
control logic (112) operative to:
produce (806) pulsed charging current using the external power supply by modulating the external power supply with the pulse train, the battery thereby being charged by the pulsed charging current;
provide (808) delay for an amount of time;
after the delay, generate (810) measurement-optimized pulses,
wherein the measurement-optimized pulses comprise a pseudo-random binary pulse sequence, and wherein pulsed charging current produced using the pseudo-random binary pulse sequence is characterized as a form of band-limited white noise;
while the battery is being charged with the pulsed charging current that is produced using the pseudo-random binary pulse sequence, make (812) a plurality of Electrochemical Impedance Spectroscopy (EIS) measurements of the battery, wherein the plurality of EIS measurements are based on the pulsed charging current that is produced using the pseudo-random binary pulse sequence;
vary (814), based on the plurality of EIS measurements, as the battery is being charged, at least one of pulse lengths and pulse durations of the plurality of charging-optimized pulses that comprise the pulse train; and
restore (816) charging of the battery with the charging-optimized pulses.

7. The circuit of claim 6, wherein the control logic (112) is further operative to vary (814), based on the plurality of EIS measurements, pulse amplitudes of the plurality of charging-optimized pulses that comprise the pulse train.

8. The circuit of claim 6, wherein the plurality of EIS measurements are made (812) without disconnecting the pulsed charging current from the battery.

9. The circuit of claim 6, wherein the control logic (112) is operative to continuously make (812) the plurality of EIS measurements while the battery is receiving the pulsed charging current.

10. The circuit of claim 6, wherein the control logic (112) is operative to make (812) the plurality of EIS measurements intermittently in response to change in operating conditions.

## Patentansprüche

1. Verfahren, umfassend:
Verbinden (802) einer Energieversorgung mit einer Batterie;
Generieren (804) einer Impulsfolge mit einer Vielzahl ladeoptimierter Impulse;
Erzeugen (806) eines gepulsten Ladestroms von der Energieversorgung durch Modulieren der Energieversorgung mit der Impulsfolge, wodurch die Batterie durch den gepulsten Ladestrom geladen wird;
Bereitstellen (808) einer Verzögerung für einen Zeitraum;
nach der Verzögerung, Generieren (810) messoptimierter Impulse,
wobei das Generieren (810) der messoptimierten Impulse ein Generieren einer Pseudo-Zufalls-Binär-Impulsfolge umfasst und wobei der erzeugte gepulste Ladestrom, der die Pseudo-Zufalls-Binär-Impulsfolge nutzt, als eine Form von bandbegrenztem weißem Rauschen gekennzeichnet ist;
während die Batterie mit dem gepulsten Ladestrom geladen wird, der durch Nutzen der Pseudo-Zufalls-Binär-Impulsfolge erzeugt wird, Erstellen (812) einer Vielzahl von EIS-Messungen ("Electrochemical Impedance Spectroscopy", elektrochemische Impendanzspektroskopie) der Batterie, wobei das Erstellen (812) der Vielzahl von EIS-Messungen ein Erstellen der Vielzahl von EIS-Messungen basierend auf dem gepulsten Ladestrom enthält, der durch Nutzen der Pseudo-Zufalls-Binär-Impulsfolge erzeugt wird;
Variieren (814), basierend auf der Vielzahl von EIS-Messungen, wie die Batterie geladen wird, wenigstens eines von Impulslängen und Impulsdauern der Vielzahl ladeoptimierter Impulse, die die Impulsfolge umfassen; und
Wiederherstellen (816) des Ladens der Batterie mit den ladeoptimierten Impulsen.

2. Verfahren nach Anspruch 1, das weiterhin ein Variieren, basierend auf der Vielzahl von EIS-Messungen, von Impulsamplituden der Vielzahl ladeoptimierter Impulse umfasst, die die Impulsfolge umfassen.

3. Verfahren nach Anspruch 1, wobei die Vielzahl von EIS-Messungen ohne Trennen des gepulsten Ladestroms von der Batterie erstellt (812) werden.

4. Verfahren nach Anspruch 1, das weiterhin ein kontinuierliches Erstellen (812) der Vielzahl von EIS-Messungen umfasst, während die Batterie den gepulsten Ladestrom empfängt.

5. Verfahren nach Anspruch 1, wobei das Erstellen (812) der Vielzahl von EIS-Messungen ein intermittierendes Erstellen (812) der Vielzahl von EIS-Messungen in Reaktion auf eine Änderung von Betriebsbedingungen umfasst.

6. Schaltung (100), umfassend:
einen Anschluss für eine Verbindung (802) mit einer externen Energieversorgung;
einen Anschluss für eine Verbindung mit einer Batterie;
einen Impulsfolgegenerator (318), der konfiguriert ist, um eine Impulsfolge mit einer Vielzahl ladeoptimierter Impulse zu generieren (804); und
eine Steuerlogik (112), die betrieben werden kann zum:
Erzeugen (806) eines gepulsten Ladestroms von der externen Energieversorgung durch Modulieren der externen Energieversorgung mit der Impulsfolge, wodurch die Batterie durch den gepulsten Ladestrom geladen wird;
Bereitstellen (808) einer Verzögerung für einen Zeitraum;
nach der Verzögerung, Generieren (810) messoptimierter Impulse,
wobei die messoptimierten Impulse eine Pseudo-Zufalls-Binär-Impulsfolge umfassen und wobei der erzeugte gepulste Ladestrom, der die Pseudo-Zufalls-Binär-Impulsfolge nutzt, als eine Form von bandbegrenztem weißem Rauschen gekennzeichnet ist;
während die Batterie mit dem gepulsten Ladestrom geladen wird, der durch Nutzen der Pseudo-Zufalls-Binär-Impulsfolge erzeugt wird, Erstellen (812) einer Vielzahl von EIS-Messungen ("Electrochemical Impedance Spectroscopy", elektrochemische Impendanzspektroskopie) der Batterie, wobei die Vielzahl von EIS-Messungen auf dem gepulsten Ladestrom basieren, der durch Nutzen der Pseudo-Zufalls-Binär-Impulsfolge erzeugt wird;
Variieren (814), basierend auf der Vielzahl von EIS-Messungen, wie die Batterie geladen wird, wenigstens eines von Impulslängen und Impulsdauern der Vielzahl ladeoptimierter Impulse, die die Impulsfolge umfassen; und
Wiederherstellen (816) des Ladens der Batterie mit den ladeoptimierten Impulsen.

7. Schaltung nach Anspruch 6, wobei die Steuerlogik (112) weiterhin betrieben werden kann, um, basierend auf der Vielzahl von EIS-Messungen, Impulsamplituden aus der Vielzahl ladeoptimierter Impulse zu variieren, die die Impulsfolge umfassen.

8. Schaltung nach Anspruch 6, wobei die Vielzahl von EIS-Messungen ohne Trennen des gepulsten Ladestroms von der Batterie erstellt (812) wird.

9. Schaltung nach Anspruch 6, wobei die Steuerlogik (112) betrieben werden kann, um kontinuierlich die Vielzahl von EIS-Messungen zu erstellen (812), während die Batterie den gepulsten Ladestrom empfängt.

10. Schaltung nach Anspruch 6, wobei die Steuerlogik (112) betrieben werden kann, um die Vielzahl von EIS-Messungen intermittierend zu erstellen (812), in Reaktion auf eine Änderung von Betriebsbedingungen.

## Revendications

1. Procédé comprenant les étapes ci-dessous consistant à :
connecter (802) une alimentation électrique à une batterie ;
générer (804) un train d'impulsions comprenant une pluralité d'impulsions optimisées pour la charge ;
produire (806) un courant de charge pulsé à partir de l'alimentation électrique, en modulant l'alimentation électrique avec le train d'impulsions, la batterie étant ainsi chargée par le courant de charge puisé ;
fournir (808) un retard pendant une durée donnée ;
après le retard, générer (810) des impulsions optimisées pour la mesure ;
dans lequel l'étape de génération (810) des impulsions optimisées pour la mesure consiste à générer une séquence d'impulsions binaires pseudo-aléatoires, et dans lequel le courant de charge pulsé produit en utilisant la séquence d'impulsions binaires pseudo-aléatoires est caractérisé comme une forme de bruit blanc à bande limitée ;
tandis que la batterie est chargée au moyen du courant de charge pulsé qui est produit en utilisant la séquence d'impulsions binaires pseudo-aléatoires, réaliser (812) une pluralité de mesures par spectroscopie d'impédance électrochimique, EIS, de la batterie, dans lequel l'étape de réalisation (812) de la pluralité de mesures par spectroscopie EIS consiste à réaliser la pluralité de mesures par spectroscopie EIS sur la base du courant de charge pulsé qui est produit en utilisant la séquence d'impulsions binaires pseudo-aléatoires ;
faire varier (814), sur la base de la pluralité de mesures par spectroscopie EIS, tandis que la batterie est en cours de charge, au moins l'une parmi des longueurs d'impulsion et des durées d'impulsion de la pluralité d'impulsions optimisées pour la charge qui constituent le train d'impulsions ; et
rétablir (816) la charge de la batterie avec les impulsions optimisées pour la charge.

2. Procédé selon la revendication 1, comprenant en outre l'étape consistant à faire varier, sur la base de la pluralité de mesures par spectroscopie EIS, des amplitudes d'impulsion de la pluralité des impulsions optimisées pour la charge constituant le train d'impulsions.

3. Procédé selon la revendication 1, dans lequel la pluralité de mesures par spectroscopie EIS est réalisée (812) sans déconnecter le courant de charge pulsé de la batterie.

4. Procédé selon la revendication 1, comprenant en outre l'étape consistant à réaliser en continu (812) la pluralité de mesures par spectroscopie EIS tandis que la batterie reçoit le courant de charge pulsé.

5. Procédé selon la revendication 1, dans lequel l'étape de réalisation (812) de la pluralité de mesures par spectroscopie EIS consiste à réaliser (812) la pluralité de mesures par spectroscopie EIS, par intermittence, en réponse à une modification des conditions de fonctionnement.

6. Circuit (100) comprenant :
une borne en vue d'une connexion (802) à une alimentation électrique externe ;
une borne en vue d'une connexion à une batterie ;
un générateur de train d'impulsions (318) configuré de manière à générer (804) un train d'impulsions comprenant une pluralité d'impulsions optimisées pour la charge ; et
une logique de commande (112) exploitable de manière à :
produire (806) un courant de charge pulsé, au moyen de l'alimentation électrique externe, en modulant l'alimentation électrique externe avec le train d'impulsions, la batterie étant ainsi chargée par le courant de charge puisé ;
fournir (808) un retard pendant une durée donnée ;
après le retard, générer (810) des impulsions optimisées pour la mesure ;
dans lequel les impulsions optimisées pour la mesure comprennent une séquence d'impulsions binaires pseudo-aléatoires, et dans lequel le courant de charge pulsé produit en utilisant la séquence d'impulsions binaires pseudo-aléatoires est caractérisé comme une forme de bruit blanc à bande limitée ;
tandis que la batterie est chargée au moyen du courant de charge pulsé qui est produit en utilisant la séquence d'impulsions binaires pseudo-aléatoires, réaliser (812) une pluralité de mesures par spectroscopie d'impédance électrochimique, (EIS), de la batterie, dans lequel la pluralité de mesures par spectroscopie EIS est basée sur le courant de charge pulsé qui est produit en utilisant la séquence d'impulsions binaires pseudo-aléatoires ;
faire varier (814), sur la base de la pluralité de mesures par spectroscopie EIS, tandis que la batterie est en cours de charge, au moins l'une parmi des longueurs d'impulsion et des durées d'impulsion de la pluralité d'impulsions optimisées pour la charge qui constituent le train d'impulsions ; et
rétablir (816) la charge de la batterie avec les impulsions optimisées pour la charge.

7. Circuit selon la revendication 6, dans lequel la logique de commande (112) est en outre exploitable de manière à faire varier (814), sur la base de la pluralité de mesures par spectroscopie EIS, des amplitudes d'impulsion de la pluralité d'impulsions optimisées pour la charge qui constituent le train d'impulsions.

8. Circuit selon la revendication 6, dans lequel la pluralité de mesures par spectroscopie EIS est réalisée (812) sans déconnecter le courant de charge pulsé de la batterie.

9. Circuit selon la revendication 6, dans lequel la logique de commande (112) est exploitable de manière à réaliser (812) en continu la pluralité de mesures par spectroscopie EIS tandis que la batterie reçoit le courant de charge pulsé.

10. Circuit selon la revendication 6, dans lequel la logique de commande (112) est exploitable de manière à réaliser (812) la pluralité de mesures par spectroscopie EIS, par intermittence, en réponse à une modification des conditions de fonctionnement.
